# EUROPÄISCHE PATENTSCHRIFT

(11) **EP 3 612 900 B1**
(45) Veröffentlichungstag und Bekanntmachung des Hinweises auf die Patenterteilung: **28.07.2021**
(21) Anmeldenummer: 18710850.1
(22) Anmeldetag: 12.03.2018
(51) Int. Cl.: G05B 19/042

(54) **VERFAHREN ZUM ÜBERWACHEN EINER ANLAGE DER AUTOMATISIERUNGSTECHNIK**
METHOD FOR MONITORING AN AUTOMATED FACILITY
PROCÉDÉ PERMETTANT DE SURVEILLER UNE INSTALLATION TECHNIQUE D'AUTOMATISATION

(30) Priorität: 21.04.2017 DE 102017108539
(43) Veröffentlichungstag der Anmeldung: 26.02.2020
(73) Patentinhaber: Endress+Hauser Process Solutions AG, 4153 Reinach (CH)
(72) Erfinder: PÖSCHMANN, Axel, 4057 Basel (CH); MAYER, Michael, 4104 Oberwil (CH); MANEVAL, Michael, 79650 Schopfheim (DE)
(74) Vertreter: Andres, Angelika Maria
(86) Internationale Anmeldenummer: PCT/EP2018/056002
(87) Internationale Veröffentlichungsnummer: WO 2018/192712

(56) Entgegenhaltungen:
- WO-A1-2004/013712
- DE-A1-102010 029 952
- DE-A1-102011 079 890
- DE-A1-102011 080 569

## Beschreibung

Die Erfindung betrifft ein Verfahren zum Überwachen einer Anlage der Automatisierungstechnik, wobei in der Anlage eine Vielzahl von Feldgeräten eingebunden sind, wobei die Feldgeräte Daten generieren, bei denen es sich insbesondere um Messdaten, Steuerdaten, Kalibrier-/Parametrierdaten, Diagnose-, Historien- und/oder Statusdaten handelt und wobei die Feldgeräte untereinander und mit zumindest einer übergeordneten Einheit mittels eines ersten Kommunikationsnetzwerks in Kommunikationsverbindung stehen. Des Weiteren umfasst die Erfindung ein Cloud Gateway, welches zum Durchführen des erfindungsgemäßen Verfahrens ausgestaltet ist.

Aus dem Stand der Technik sind bereits Feldgeräte bekannt geworden, die in industriellen Anlagen zum Einsatz kommen. In der Automatisierungstechnik ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

DE 10 2011 080569 offenbart ein Gateway mit einer Scanning Server App. Diese dient dem Zweck, einen Feldbus zu scannen und Identifikationsdaten der gefundenen Feldgeräte an einen Server zu senden, um von diesem dann Gerätebeschreibungen zu den Feldgeräten zu laden, DE 10 2010 029952 offenbart, dass Parametrier- / Konfigurationsdaten von Feldgeräten abgefragt werden, falls diese vom Servicepersonal geändert wurden, DE 10 2011 079890 zeigt einen Netzwerkscan eines Kommunikationsnetzwerks mittels einer Kommunikationshardware und WO 2004 / 013712 beschreibt eine Anfrage einer Steuereinheit an ein Feldgerät zum Erfassen dessen Gerätetyps.

In modernen Industrieanlagen sind Feldgeräte in der Regel über Kommunikationsnetzwerke wie beispielsweise Feldbusse (Profibus®, Foundation® Fieldbus, HART®, etc.) mit übergeordneten Einheiten verbunden. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Heutzutage verfügbare Systeme zum Überwachen von Anlagenkomponenten (sogenannte "Asset Health"-Systeme) rufen zyklisch Daten von Feldgeräten (bspw. Informationen über die Gerätegesundheit) ab. Die Informationen, welche Daten abgerufen werden sollen, sind jedoch lokal im Überwachungssystem gespeichert. Nachteilig an dieser Lösung ist, dass das Überwachungssystem lokal läuft und auch die besagten Informationen über die abzurufenden Daten nur lokal verfügbar sind. Eine automatische Aktualisierung oder eine entferne Konfiguration des Überwachungssystems ist folglich nicht vorgesehen. Beispielweise müssen beim Einbau eines neuen Feldgerätetyps besagte lokal gespeicherte Informationen aktualisiert werden - andernfalls ist dem Überwachungssystem das Feldgerät unbekannt oder es kann nur standardisierte Feldgerätedaten abrufen. Herstellerspezifische Diagnosedaten, wie beispielsweise bei Feldgeräten der Anmelderin verfügbare "Heartbeat"-Diagnosedaten, sind auf diesem Wege nicht abrufbar.

Ausgehend von dieser Problematik liegt der Erfindung die Aufgabe zugrunde, ein Verfahren vorzustellen, welches eine benutzerfreundliche und insbesondere flexible Überwachung von Komponenten einer Anlage der Automatisierungstechnik erlaubt.

Die Aufgabe wird durch ein Verfahren zum Überwachen einer Anlage der Automatisierungstechnik gemäß Anspruch 1 gelöst.

Der große Vorteil des erfindungsgemäßen Verfahrens besteht darin, dass auf einfache Art und Weise eine Überwachung von Feldgeräten der Automatisierungstechnik in einer Anlage etabliert werden kann. Das Cloud Gateway besitzt eine quasi "Plug and Play"-Funktionalität, indem dieses alle an ihm angeschlossenen Feldgeräte automatisch erkennt und sich deren korrespondierende Gerätebeschreibungen von dem Server herunterlädt. Hierbei werden nur diejenigen Gerätebeschreibungen heruntergeladen, für welche auch tatsächlich Feldgeräte vorhanden sind. Im idealen Fall muss ein Bediener das Cloud Gateway lediglich an einen oder mehrere Feldbusse anschließen, sowie die Parameter für die Kommunikation mit dem Server über das zweite Kommunikationsnetzwerk eingeben. Diese Parameter sind beispielsweise Zugangsdaten für den Server.

Das Cloud Gateway ist derart ausgestaltet, dass dieses mit einer Vielzahl unterschiedlicher Kommunikationsnetzwerke, welche sich sowohl hardwaremäßig (OSI Layer 1, beispielsweise hinsichtlich des Steckertyps, der übermittelten elektrischen Leistung, etc.), aber auch hinsichtlich des jeweils verwendeten Protokolls unterscheiden. Das erste Kommunikationsnetzwerk kann dabei sowohl drahtgebunden als auch drahtlos ausgestaltet sein. Es werden beispielsweise Feldbusse der Automatisierungstechnik, wie beispielsweise HART, Profibus, Foundation Fieldbus, aber auch IT-Kommunikationsnetzwerke, wie beispielsweiese Ethernet unterstützt. Das Cloud Gateway ermöglicht den gleichzeitigen Anschluss mehrerer erster, auch untereinander verschiedener Kommunikationsnetzwerke.

Bei dem zweiten Kommunikationsnetzwerk handelt es sich insbesondere um das Internet, bzw. um ein Kommunikationsnetzwerk, welches einen Zugang zum Internet ermöglicht. Im Falle, dass das zweite Kommunikationsnetzwerk drahtlos ausgestaltet ist, handelt es sich bei diesem insbesondere um GSM, UMTS, LTE, 5G, etc. Der Server ist vorteilhafterweise für einen Bediener mittels des Internets erreichbar und ermöglicht Cloud-Funktionalitäten.

Das Erstellen des Konfigurationsplans wird entweder automatisch vom Server vorgenommen, oder mithilfe des Bedieners. Im letztgenannten Fall verbindet sich der Bediener, beispielsweise mittels eines PCs, mit dem Server und erstellt, beispielsweise mithilfe einer Eingabemaske, den Konfigurationsplan.

Feldgeräte, welche im Zusammenhang mit dem erfindungsgemäßen Verfahren genannt sind, sind bereits im einleitenden Teil der Beschreibung beispielhaft genannt worden.

Eine vorteilhafte Weiterbildung des erfindungsgemäßen Verfahrens sieht vor, dass ein Einbinden eines neuen Feldgeräts in die Anlage automatisch von dem Cloud Gateway detektiert wird.

Gemäß einer bevorzugten Ausgestaltung des erfindungsgemäßen Verfahrens ist vorgesehen, dass das Cloud Gateway für das neue Feldgerät eine zu dem neuen Feldgerät korrespondierende Gerätebeschreibung von dem Server herunterlädt und installiert.

Ein Hinzufügen eines neuen Feldgeräts ist somit problemlos möglich, was die Flexibilität des Überwachens erhöht. Das Detektieren und Herunterladen der Gerätebeschreibung verläuft auch hier automatisch, so dass ein Bediener selbst diese Schritte nicht vornehmen muss.

Des Weiteren kann vorgesehen sein, die Gerätebeschreibungen für eines oder mehrere Feldgeräte selbstständig zu aktualisieren, wenn das Feldgerät entweder hardwareseitig neu konfiguriert oder neu parametriert wird, bzw. die Firmware aktualisiert wird, oder wenn für ein oder mehrere Feldgeräte, bzw. Feldgerätetypen aktualisierte Gerätebeschreibungen zur Verfügung stehen.

Eine vorteilhafte Weiterbildung des erfindungsgemäßen Verfahrens sieht vor, der aktuell auf dem Cloud Gateway befindliche Konfigurationsplan mittels des Servers angepasst wird, indem der Server eine Kopie des Konfigurationsplans vorhält, wobei ein Bediener auf den Server zugreift und die in der Kopie des Konfigurationsplans enthaltenen Definitionen ändert. Hierbei kann es sich um den Server handeln, an welchen die abgefragten Daten übermittelt werden, bzw. von welchem die Gerätebeschreibungen heruntergeladen werden. Alternativ befindet sich der Server lokal bei dem Bediener/Kunden. Es kann auch vorgesehen sein, dass der Server, mittels welchem der Bediener den Konfigurationsplan bearbeitet, als Webserver des Cloud Gateways ausgestaltet ist.

Gemäß einer bevorzugten Ausgestaltung des erfindungsgemäßen Verfahrens ist vorgesehen, dass die angepasste Kopie des Konfigurationsplans auf das Cloud Gateway geladen wird, um den aktuell auf dem Cloud Gateway befindlichen Konfigurationsplan zu aktualisieren. Es kann hierbei vorgesehen sein, den vorher vorhandenen Konfigurationsplan in einer Historie zu speichern, um diesen bei Bedarf wieder verwenden zu können.

Eine besonders vorteilhafte Weiterbildung des erfindungsgemäßen Verfahrens sieht vor, dass das Cloud Gateway den aktuell auf dem Cloud Gateway befindlichen Konfigurationsplan anhand historischer Informationen selbstständig optimiert und aktualisiert. Ein Beispiel solcher historischen Informationen können Events sein, welche in einem Diagnosefall eines Feldgeräts generiert werden. Es kann auch vorgesehen sein, die selbstständige Optimierung des Konfigurationsplans von dem Server vornehmen zu lassen, falls dieser auf die historischen Informationen Zugriff besitzt.

Gemäß einer besonders bevorzugten Ausgestaltung des erfindungsgemäßen Verfahrens ist vorgesehen, dass das Aktualisieren des Konfigurationsplans im laufenden Betrieb des Cloud Gateways durchgeführt wird. Der Betrieb des Cloud Gateways wird dadurch nicht unterbrochen, was eine flexible und einfache Anpassung ermöglicht.

Gemäß einer vorteilhaften Ausgestaltung des erfindungsgemäßen Verfahrens ist vorgesehen, dass die angepasste Kopie des Konfigurationsplans , bzw. der durch das Cloud Gateway aktualisierte Konfigurationsplan auf dem Server gespeichert wird und standardmäßig für den Produkttyp des Feldgeräts und/oder für die Prozessstelle des Feldgeräts vorgeschlagen wird. Ein Benutzer kann auf diese Art und Weise vorkonfigurierte, zur Applikation passende Konfigurationspläne übernehmen.

Gemäß einer vorteilhaften Ausgestaltung des erfindungsgemäßen Verfahrens ist vorgesehen, dass das Feldgerät eine Warnmeldung generiert und an den Server übermittelt, im Falle dass für zumindest eines der Feldgeräte keine korrespondierende Gerätebeschreibung auf der Datenbank vorhanden ist. Der Bediener wird durch die Warnmeldung beispielsweise aufgefordert, die fehlenden Gerätebeschreibungen auf den Server zu laden, bzw. eine Internetadresse anzugeben, unter welcher sich die fehlenden Gerätebeschreibungen aufrufen lassen.

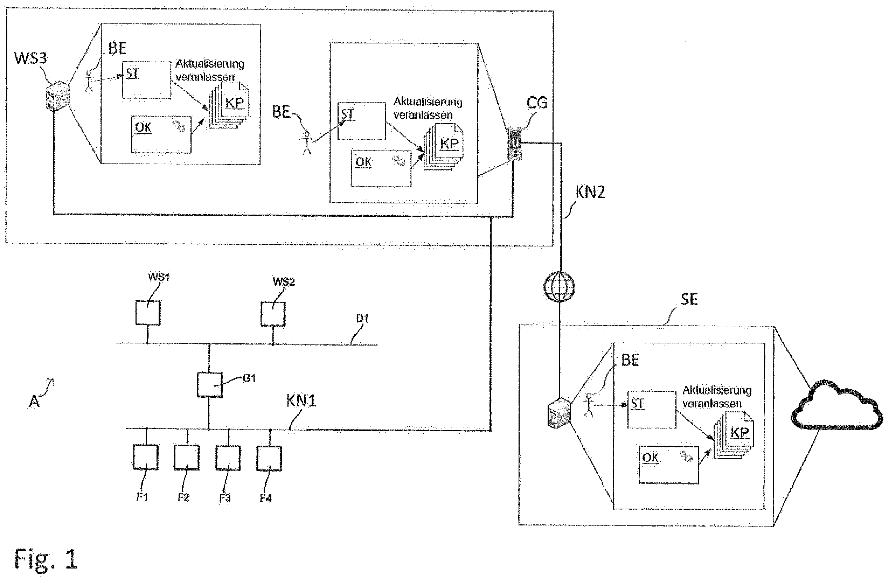

Die Erfindung wird anhand der nachfolgenden Figuren näher erläutert. Es zeigen Fig. 1: ein Ausführungsbeispiel des erfindungsgemäßen Systems.

Fig. 1 zeigt ein Ausführungsbeispiel des erfindungsgemäßen Systems. Hierbei ist eine Anlage A der Automatisierungstechnik dargestellt. An einem Datenbus D1 sind mehrere Workstation-PC WS1, WS2 in der Leitebene der Anlage A angeschlossen. Diese Workstation-PCs dienen als übergeordnete Einheiten (Leitsystem bzw. Steuereinheit), unter anderem zur Prozessvisualisierung, Prozessüberwachung und zum Engineering wie zum Bedienen und Überwachen von Feldgeräten.

Der Datenbus D1 arbeitet z. B. nach dem Profibus DP-Standard oder nach dem HSE (High Speed Ethernet)-Standard der Foundation Fieldbus. Über ein Gateway G1, das auch als Linking Device, Field Controller oder auch als Segment-Koppler bezeichnet wird, ist der Datenbus D1 mit einem Feldbus-Segment SM1 verbunden. Das Feldbus-Segment SM1 besteht aus mehreren Feldgeräten F1, F2, F3, F4, die über ein erstes Kommunikationsnetzwerk KN miteinander verbunden sind. Bei den Feldgeräten F1, F2, F3, F4 kann es sich sowohl um Sensoren oder um Aktoren handeln.

Bei dem ersten Kommunikationsnetzwerk handelt es sich insbesondere um einen Feldbus der Automatisierungstechnik, welcher entsprechend nach einem der bekannten z.B. Feldbusstandards Profibus, Foundation Fieldbus oder HART arbeitet.

Beispiele und Funktionen solcher Feldgeräte F1, F2, F3, F4 sind bereits im einleitenden Teil der Beschreibung aufgeführt worden.

An das erste Kommunikationsnetzwerk KN1 ist ein Cloud Gateway CG, das auch als Netzwerkgerät bezeichnet wird, angeschlossen. Bei diesem handelt es sich insbesondere um einen Router oder einen Switch. Über ein zweites Kommunikationsnetzwerk KN2 ist das Cloud Gateway CG mit einem cloudfähigen Server SE in Kommunikationsverbindung. Bei dem zweiten Kommunikationsnetzwerk KN2 handelt es sich insbesondere um das Internet. Neben dem ersten Kommunikationsnetzwerk KN1 kann das Cloud Gateway CG an eine Vielzahl weiterer, verschiedener Kommunikationsnetzwerke angeschlossen werden.

Bei erstmaligem Verbinden mit dem ersten Kommunikationsnetzwerk KN1 sucht das Cloud Gateway CG nach an dem ersten Kommunikationsnetzwerk KN1 angeschlossenen Feldgeräten F1, F2, F3, F4. Hierfür hört es beispielsweise den zyklischen Datenverkehr zwischen den Feldgeräten und dem Gateway G1 ab und extrahiert aus diesem die Feldbusadresse der Feldgeräte F1, F2, F3, F4. Anschließend fragt das Cloud Gateway mittels azyklischer Kommunikation weitere Informationen der Feldgeräte F1, F2, F3, F4 ab, bspw. deren Seriennummer, Gerätetyp, Firmwareversion, etc. Hierfür ist das Cloud Device je nach verwendetem Feldbus als Master ausgestaltet.

Mittels diesen weiteren Informationen kann das Cloud Gateway CG die Feldgeräte F1, F2, F3, F4 eindeutig bestimmen und vom Server SE die jeweils passenden Gerätebeschreibungen oder Treiber herunterladen und installieren. Diese Vorgänge geschehen automatisch und stellen daher für einen Bediener BE einen hohen Komfort dar. Sind für ein oder mehrere Feldgeräte F1, F2, F3, F4 keine passenden Gerätebeschreibungen auf dem Server SE vorhanden, so generiert das Cloud Gateway CG eine Alarmmeldung, welche an den Server SE übermittelt wird.

Werden Feldgeräte F1, F2, F3, F4 geupdatet oder kommen neue Feldgeräte hinzu, so detektiert das Cloud Gateway CG diese Änderungen automatisch und lädt die nun aktuell passenden Gerätebeschreibungen für die geänderten Feldgeräte F1, F2, F3, F4 herunter.

Auf dem Cloud Gateway CG befindet sich zumindest ein Konfigurationsplan KP, oder auch Ablaufplan. Dieser Konfigurationsplan KP legt fest, zu welchen Zeitpunkten welche Daten von welchen Feldgeräten F1, F2, F3, F4 mittels des Cloud Gateways abgerufen werden sollen. Sind mehrere erste Kommunikationsnetzwerke an dem Cloud Gateway CG angeschlossen, so kann für jedes dieser ersten Kommunikationsnetzwerke ein eigener Konfigurationsplan auf dem Cloud Gateway CG vorgesehen sein.

Das Erstellen eines solchen Konfigurationsplans KP kann von einem Bediener BE mittels des Servers SE vorgenommen werden. Hierfür verbindet sich der Bediener BE beispielsweise mittels eines PCs via Internet mit dem Server SE und authentifiziert sich gegenüber diesem. Nach erfolgter Authentifizierung erhält der Bediener BE Zugriff auf ein Softwaretool ST des Severs SE welches eine Liste aller seiner ihm zugeordneten Cloud Gateways CG und die mit diesem verbundenen Feldgeräte F1, F2, F3, F4 anzeigt. An dieser Stelle wird dem Bediener BE auch die Alarmmeldung angezeigt, welcher bei nicht-Vorliegens einer passenden Gerätebeschreibung für ein Feldgerät F1, F2, F3, F4 von einem Cloud Gateway CG generiert wird. Mittels Eingabemasken kann der Bediener BE nun auf komfortable Art und Weise Konfigurationspläne KP für die verschiedenen Cloud Gateways CG erstellen. Des Weiteren wird bekommt der Bediener BE die bereits vorhandenen, auf den Cloud Gateways CG befindlichen Konfigurationspläne KP angezeigt und kann diese einsehen, bzw. bei Bedarf aktualisieren.

Nach Erstellen bzw. Aktualisieren eines Konfigurationsplans KP wird dieser an das Cloud Gateway CG übermittelt, worauf dieses den Konfigurationsplan KP installiert, bzw. einen bereits vorhandenen Konfigurationsplan KP überschreibt. Hierfür wird der Betrieb des Cloud Gateways CG nicht unterbrochen, so dass ein mitunter zeitintensiver Neustart des Cloud Gateways CG vor Ort nicht vonnöten ist. Vorteilhafterweise ist auf dem Server SE eine automatische Optimierungskomponente OK vorgesehen, welche ein selbstständiges Aktualisieren des Konfigurationsplans KP auf Basis historischer Informationen vorsieht.

Alternativ kann vorgesehen sein, dass das Softwaretool ST und/oder die automatische Optimierungskomponente OK nicht auf dem Server SE, sondern auf einem PC WS3 in der Anlage A, welcher mit dem ersten Kommunikationsnetzwerk KN1 verbunden ist, vorgesehen ist.

Alternativ kann das Softwaretool ST und/oder die automatische Optimierungskomponente OK auf dem Cloud Gateway CG selbst vorgesehen sein. In diesem Fall kann der Bediener BE auf diese Komponenten beispielsweise über einen Webserver des Cloud Gateways CG zugreifen.

Basierend auf dem Konfigurationsplan KP fragt das Cloud Gateway CG die Daten von den Feldgeräten F1, F2, F3, F4 ab und übermittelt die abgefragten Daten mittels des zweiten Kommunikationsnetzwerks KN2 an den Server SE. Auf diesem werden die Daten gesammelt und können von dem Bediener BE eingesehen und zur weiteren Bearbeitung verwendet werden.

### Bezugszeichenliste

- A: Anlage der Automatisierungstechnik
- BE: Bediener
- CG: Cloud Gateway bzw. Netzwerkgerät
- D1: Datenbus
- F1, F2, F3, F4: Feldgeräte
- G1: Gateway
- KN1: erstes Kommunikationsnetzwerk
- KN2: zweites Kommunikationsnetzwerk
- KP: Konfigurationsplan
- OK: automatische Aktualisierungskomponente
- SE: Server
- ST: Softwaretool
- WS1, WS2: übergeordnete Einheit

## Patentansprüche

1. Verfahren zum Überwachen einer Anlage (A) der Automatisierungstechnik, wobei in der Anlage (A) eine Vielzahl von Feldgeräten (F1, F2, F3, F4) eingebunden sind, wobei die Feldgeräte (F1, F2, F3, F4) Daten generieren, bei denen es sich insbesondere um Messdaten, Steuerdaten, Kalibrier-/Parametrierdaten, Diagnose-, Historien- und/oder Statusdaten handelt und wobei die Feldgeräte (F1, F2, F3, F4) untereinander und mit zumindest einer übergeordneten Einheit (WS1, WS2) mittels eines ersten Kommunikationsnetzwerks (KN1) in Kommunikationsverbindung stehen, umfassend:
- Verbinden eines Netzwerkgeräts (CG) mit dem ersten Kommunikationsnetzwerk (KN1) der Anlage (A);
- Ermitteln der an dem ersten Kommunikationsnetzwerk (KN1) angeschlossenen Feldgeräte (F1, F2, F3, F4) mittels des Netzwerkgeräts (CG);
- Prüfen, ob für zumindest einen Teil der ermittelten Feldgeräte (F1, F2, F3, F4) auf einem über ein zweites Kommunikationsnetzwerk (KN2) mit dem Netzwerkgerät (CG) verbundenen Server (SE) zu den ermittelten Feldgeräten (F1, F2, F3, F4) korrespondierende Gerätebeschreibungen vorhanden sind;
- Herunterladen der zu den jeweiligen ermittelten Feldgeräten (F1, F2, F3, F4) korrespondierenden Gerätebeschreibungen von dem Server (SE) über das zweite Kommunikationsnetzwerk (KN2) und Installieren der Gerätebeschreibungen auf dem Netzwerkgerät (CG);
- Erstellen zumindest eines Konfigurationsplans (KP) mittels des Servers (SE), wobei der Konfigurationsplan (KP) abzufragende Feldgeräte (F1, F2, F3, F4), den Typ der abzufragenden Daten der Feldgeräte (F1, F2, F3, F4) und die Häufigkeit des Abfragens, bzw. einen oder mehrere Zeitpunkt für das Abfragen, der Daten für jedes einzelne der abzufragenden Feldgeräte(F1, F2, F3, F4) definiert;
- Übermitteln des Konfigurationsplans (KP) an das Netzwerkgerät (CG);
- Abfragen der Daten von den abzufragenden Feldgeräten (F1, F2, F3, F4) mittels des Netzwerkgeräts (CG) gemäß dem auf dem Netzwerkgerät (CG) befindlichen Konfigurationsplan (KP);
- Übermitteln der abgefragten Daten an den Server (SE) durch das Netzwerkgerät (CG); und
- Sammeln und Auswerten der übermittelten Daten auf dem Server (SE).

2. Verfahren nach Anspruch 1, wobei ein Einbinden eines neuen Feldgeräts (F1, F2, F3, F4) in die Anlage (A) automatisch von dem Netzwerkgerät (CG) detektiert wird.

3. Verfahren nach Anspruch 2, wobei das Netzwerkgerät (CG) für das neue Feldgerät (F1, F2, F3, F4) eine zu dem neuen Feldgerät (F1, F2, F3, F4) korrespondierende Gerätebeschreibung von dem Server (SE) herunterlädt und installiert.

4. Verfahren nach zumindest einem der vorherigen Ansprüche, wobei der aktuell auf dem Netzwerkgerät (CG) befindliche Konfigurationsplan (KP) mittels des Servers (SE) angepasst wird, indem der Server (SE) eine Kopie des Konfigurationsplans (KP) vorhält, wobei ein Bediener auf den Server (SE) zugreift und die in der Kopie des Konfigurationsplans (KP) enthaltenen Definitionen ändert.

5. Verfahren nach Anspruch 4, wobei die angepasste Kopie des Konfigurationsplans (KP) auf das Netzwerkgerät (CG) geladen wird, um den aktuell auf dem Netzwerkgerät (CG) befindlichen Konfigurationsplan (KP) zu aktualisieren.

6. Verfahren nach Anspruch 5 oder 6, wobei das Aktualisieren des Konfigurationsplans (KP) im laufenden Betrieb des Netzwerkgeräts (CG) durchgeführt wird.

7. Verfahren nach zumindest einem der Ansprüche 4 bis 6, wobei die angepasste Kopie des Konfigurationsplans (KP), bzw. der durch das Netzwerkgerät (CG) aktualisierte Konfigurationsplan (KP) auf dem Server (SE) gespeichert wird und standardmäßig für Produkttypen der abzufragenden Feldgeräte (F1, F2, F3, F4) und/oder Prozessstellen der abzufragenden Feldgeräte (F1, F2, F3, F4) vorgeschlagen wird.

8. Verfahren nach zumindest einem der vorherigen Ansprüche, wobei das Netzwerkgerät (F1, F2, F3, F4) eine Warnmeldung generiert und an den Server (SE) übermittelt, im Falle dass für zumindest eines der Feldgeräte (F1, F2, F3, F4) keine korrespondierende Gerätebeschreibung auf der Datenbank vorhanden ist.

## Claims

1. Procedure designed to monitor a facility (A) used in automation engineering, wherein several field devices (F1, F2, F3, F4) are integrated in the facility (A), wherein the field devices (F1, F2, F3, F4) generate data, particularly measurement data, control data, calibration/parameterization data, diagnostic data, history data and/or status data, and wherein the field devices (F1, F2, F3, F4) are in communication with one another and with at least a master unit (WS1, WS2) by means of a first communication network (KN1), said procedure comprising:
- Connection of a network device (CG) to the first communication network (KN1) of the facility (A);
- Determination of the field devices (F1, F2, F3, F4) connected to the first communication network (KN1) by means of the network device (CG);
- Verification as to whether device descriptions corresponding to the field devices (F1, F2, F3, F4) determined are present for at least some of the field devices (F1, F2, F3, F4) determined on a server (SE) connected to the network device (CG) via a second communication network (KN2);
- Download of the device descriptions, corresponding to the field devices (F1, F2, F3, F4) determined, from the server (SE) via the second communication network (KN2) and installation of the device descriptions on the network device (CG);
- Creation of at least a configuration plan (KP) by means of the server (SE), wherein the configuration plan (KP) defines the field devices (F1, F2, F3, F4) to be interrogated, the type of data of the field devices (F1, F2, F3, F4) to be interrogated and the frequency of the interrogation, or one or more times for the interrogation, of the data for each of the field devices (F1, F2, F3, F4) to be interrogated;
- Transmission of the configuration plan (KP) to the network device (CC);
- Interrogation of the data from the field devices (F1, F2, F3, F4) to be interrogated by means of the network device (CG) according to the configuration plan (KP) located on the network device (CG);
- Transmission of the interrogated data to the server (SE) by the network device (CG); and
- Collection and evaluation of the transmitted data on the server (SE).

2. Procedure as claimed in Claim 1, wherein the integration of a new field device (F1, F2, F3, F4) into the facility (A) is automatically detected by the network device (CG).

3. Procedure as claimed in Claim 2, wherein the network device (CG) downloads and installs - for the new field device (F1, F2, F3, F4) - a device description corresponding to the new field device (F1, F2, F3, F4) from the server (SE).

4. Procedure as claimed in at least one of the previous claims, wherein the configuration plan (KP) currently located on the network device (CG) is adapted means of the server (SE) in that the server (SE) maintains a copy of the configuration plan (KP), wherein an operator accesses the server (SE) and changes the definitions contained in the copy of the configuration plan (KP).

5. Procedure as claimed in Claim 4, wherein the modified copy of the configuration plan (KP) is uploaded to the network device (CG) to update the configuration plan (KP) currently located on the network device (CG).

6. Procedure as claimed in Claim 5 or 6, wherein the updating of the configuration plan (KP) is performed during the ongoing operation of the network device (CG).

7. Procedure as claimed in at least one of the Claims 4 to 6, wherein the modified copy of the configuration plan (KP), or the configuration plan (KP) updated by the network device (CG), is saved on the server (SE) and proposed by default for product types of the field devices (F1, F2, F3, F4) to be interrogated and/or process points of the field devices (F1, F2, F3, F4) to be interrogated.

8. Procedure as claimed in at least one of the previous claims, wherein the network device (CG) generates a warning message and transmits it to the server (SE) in the event that no corresponding device description is available in the database for at least one of the field devices (F1, F2, F3, F4).

## Revendications

1. Procédé destiné à la surveillance d'une installation (A) de la technique d'automatisation, pour lequel plusieurs appareils de terrain (F1, F2, F3, F4) sont intégrés dans l'installation (A), les appareils de terrain (F1, F2, F3, F4) générant des données qui sont notamment des données de mesure, des données de commande, des données d'étalonnage / de paramétrage, des données de diagnostic, des données d'historique et/ou des données d'état, et les appareils de terrain (F1, F2, F3, F4) étant en communication les uns avec les autres et avec au moins une unité maître (WS1, WS2) au moyen d'un premier réseau de communication (KN1), lequel procédé comprend :
- Connexion d'un équipement de réseau (CG) avec le premier réseau de communication (KN1) de l'installation (A) ;
- Détermination des appareils de terrain (F1, F2, F3, F4) connectés au premier réseau de communication (KN1) au moyen de l'équipement de réseau (CG) ;
- Vérification si des descriptions d'appareil correspondant aux appareils de terrain (F1, F2, F3, F4) déterminés sont présentes pour au moins certains des appareils de terrain (F1, F2, F3, F4) déterminés sur un serveur (SE) connecté à l'équipement de réseau (CG) via un deuxième réseau de communication (KN2) ;
- Téléchargement des descriptions d'appareil, correspondant aux appareils de terrain (F1, F2, F3, F4) déterminés respectifs, à partir du serveur (SE) via le deuxième réseau de communication (KN2) et installation des descriptions d'appareil sur l'équipement de réseau (CG) ;
- Création d'au moins un plan de configuration (KP) au moyen du serveur (SE), le plan de configuration (KP) définissant des appareils de terrain (F1, F2, F3, F4) à interroger, le type de données des appareils de terrain (F1, F2, F3, F4) à interroger et la fréquence d'interrogation, ou un ou plusieurs instants pour l'interrogation des données relatives à chacun des appareils de terrain (F1, F2, F3, F4) à interroger ;
- Transmission du plan de configuration (KP) à l'équipement de réseau (CC) ;
- Interrogation des données des appareils de terrain (F1, F2, F3, F4) à interroger au moyen de l'équipement de réseau (CG) selon le plan de configuration (KP) se trouvant sur l'équipement de réseau (CG) ;
- Transmission des données interrogées au serveur (SE) par l'équipement de réseau (CG) ; et
- Collecte et exploitation des données transmises sur le serveur (SE).

2. Procédé selon la revendication 1, pour lequel une intégration d'un nouvel appareil de terrain (F1, F2, F3, F4) dans l'installation (A) est détectée automatiquement par l'équipement de réseau (CG).

3. Procédé selon la revendication 2, pour lequel l'équipement de réseau (CG) télécharge et installe, pour le nouvel appareil de terrain (F1, F2, F3, F4), une description d'appareil correspondant au nouvel appareil de terrain (F1, F2, F3, F4) à partir du serveur (SE).

4. Procédé selon au moins l'une des revendications précédentes, pour lequel le plan de configuration (KP) se trouvant actuellement sur l'équipement de réseau (CG) est adapté au moyen du serveur (SE) en ce que le serveur (SE) maintient une copie du plan de configuration (KP), un opérateur accédant au serveur (SE) et modifiant les définitions contenues dans la copie du plan de configuration (KP).

5. Procédé selon la revendication 4, pour lequel la copie adaptée du plan de configuration (KP) est chargée sur l'équipement de réseau (CG) pour mettre à jour le plan de configuration (KP) se trouvant actuellement sur l'équipement de réseau (CG).

6. Procédé selon la revendication 5 ou 6, pour lequel la mise à jour du plan de configuration (KP) est effectuée pendant le fonctionnement de l'équipement de réseau (CG).

7. Procédé selon au moins l'une des revendications 4 à 6, pour lequel la copie adaptée du plan de configuration (KP), ou le plan de configuration (KP) mis à jour par l'équipement de réseau (CG) est enregistré sur le serveur (SE) et proposé par défaut pour les types de produits des appareils de terrain (F1, F2, F3, F4) à interroger et/ou les emplacements au sein du process des appareils de terrain (F1, F2, F3, F4) à interroger.

8. Procédé selon au moins l'une des revendications précédentes, pour lequel l'équipement de réseau (CG) génère et transmet au serveur (SE) un message d'avertissement, dans le cas où pour au moins un des appareils de terrain (F1, F2, F3, F4), aucune description d'appareil correspondante n'est disponible dans la base de données.
